(19) Europäisches Patentamt
European Patent Office
Office européen des brevets

(11) Publication number : **0 524 829 A1**

# (12) EUROPEAN PATENT APPLICATION

(21) Application number : **92306765.6**

(51) Int. Cl.[5] : **C07F 7/08,** A01N 55/00

(22) Date of filing : **23.07.92**

(30) Priority : **23.07.91 JP 206335/91**

(43) Date of publication of application :
**27.01.93 Bulletin 93/04**

(84) Designated Contracting States :
**DE FR GB**

(71) Applicant : **SHIN-ETSU CHEMICAL CO., LTD.**
**6-1, Ohtemachi 2-chome**
**Chiyoda-ku Tokyo (JP)**

(71) Applicant : **RIKAGAKU KENKYUSHO**
**2-1 Hirosawa**
**Wako-shi Saitama-ken (JP)**

(72) Inventor : **Yagihashi, Fujio**
**Aobadai Apartment 101, 28-1, 1-chome, Aobadai**
**Midori-ku, Yokohama-shi, Kanagawa-ken (JP)**
Inventor : **Furihata, Tomoyoshi**
**9-2-18, Arima, Miyamae-ku**
**Kawasaki-shi, Kanagawa-ken (JP)**
Inventor : **Takamizawa, Minoru**
**4-8-21, Kitazawa, Setagaya-ku**
**Tokyo (JP)**
Inventor : **Kamuro, Yasuo**
**2-15-16, Hanaike**
**Ichinomiya-shi, Aichi-ken (JP)**
Inventor : **Yoshioka, Hirosuke**
**4-14-24-1004, Koishikawa**
**Bunkyo-ku, Tokyo (JP)**

(74) Representative : **Votier, Sidney David et al**
**CARPMAELS & RANSFORD 43, Bloomsbury Square**
**London WC1A 2RA (GB)**

## (54) Novel silane compound, process of preparing the same and plant growth regulator containing the same.

(57) A silane compound having the general formula (1) :

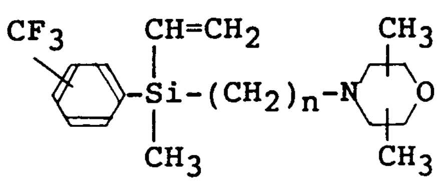

(1)

wherein n is integer of 4 to 7, a process of preparing said silane compound and a plant growth regulator comprising the same. The silane compound has plant growth regulating activities, and the plant growth regulator is useful in the effective production and harvest of field crops and mechanization of the harvest.

EP 0 524 829 A1

## BACKGROUND OF THE INVENTION

### 1. Field of the Invention

The present invention relates to a novel silane compound, a process of preparing the same and a plant growth regulator containing the same.

### 2. Description of Prior Art

As an alkane having a cyclic amino group at one terminal end and a substituted silyl group at the other terminal end, compounds with 3 or less carbon atoms in the alkane moiety are known. For example, European Patent Publication No. 241 429 A2 discloses as such compounds with one carbon atom the compounds represented by the formulas:

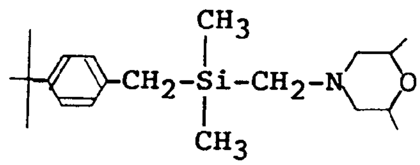 , 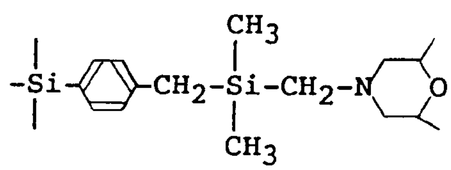

and

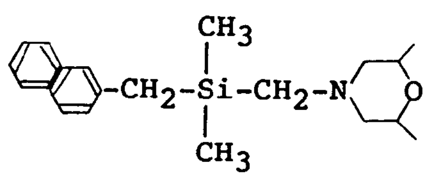 .

European Patent Publication No. 313 353 Al discloses the compounds represented by the formulas:

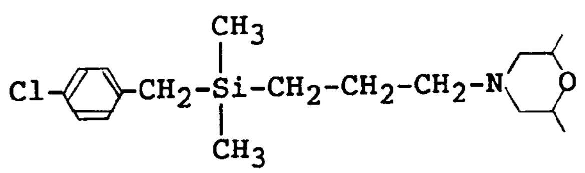 ,

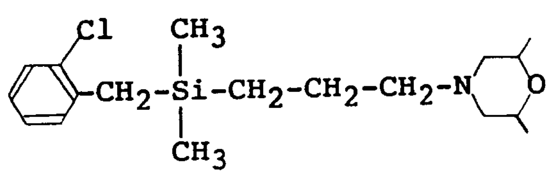 ,

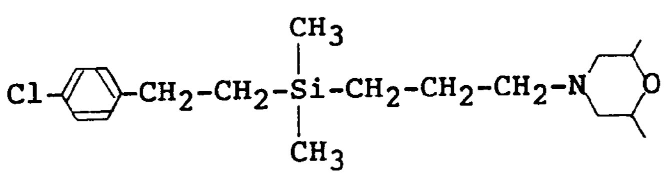 ,

and

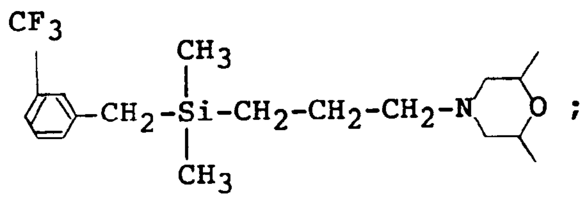

and also discloses as a compound with 4 carbon atoms the compound represented by the formula:

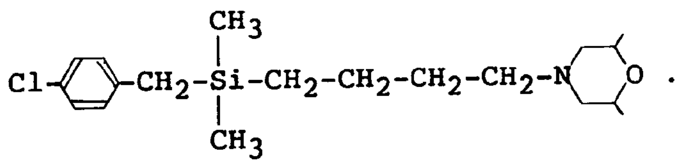

However, any compounds are not known that have a phenyl group directly bonded to a silicon atom and have 4 or more carbon atoms in the alkane moiety located between a cyclic amino group and a substituted silyl group.

## SUMMARY OF THE INVENTION

We, the inventors of the present invention, have succeeded in the creation of an alkane compound that has 4 to 7 carbon atoms in the alkane moiety, has a trifluoromethylphenyl-substituted Silyl group at one end and has a dimethylmorpholino group at the other end. We studied on the biological activities of the compound to find that the compound has biological activities useful in the production of field or garden crops and improvement in environment.

Thus, according to the present invention, there is provided a silane compound having the general formula (1):

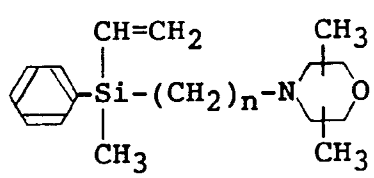

(1)

wherein n is an integer of 4 to 7. Further, there are also provided a process of preparing the silane compound of the general formula (1) and a plant growth regulator comprising the silane compound.

The silane compound of the present invention is a novel substance having plant growth regulating activities, and therefore the plant growth regulator comprising it as the active ingredient has effect of inhibiting the growth of plumules and suckers, shedding flower buds and flowers and promoting the ripening of fruits; hence, it is useful in the effective production and harvest of field crops and mechanization of the harvest.

## DETAILED DESCRIPTION OF PREFERRED EMBODIMENTS

### Silane compound

In the general formula (1), a trifluoromethyl group is attached to the benzene ring, the position to which the trifluoromethyl group is bonded is not particularly limited. Accordingly, the trifluoromethylphenyl group bonded to the silicone atom includes, for example, p-trifluoromethylphenyl, m-trifluoromethylphenyl and o-trifluoromethylphenyl groups.

The symbol n is an integer of 4 to 7. Accordingly, the alkylene group $-(CH_2)_n-$ contained in the general formula (1) includes tetramethylene, pentamethylene, hexamethylene and heptamethylene groups.

The dimethylmorpholino group contained in the general formula (1) includes 2,3-, 2,5-, 2,6-, 3,5-, 3,6- and 5,6- dimethylmorpholino groups, among which preferred is the 2,6-dimethylmorpholino group.

Preparation Process

The silane compound of the general formula (1) can be prepared by, for example, a process which comprises reacting a haloalkylsilane having the general formula (2):

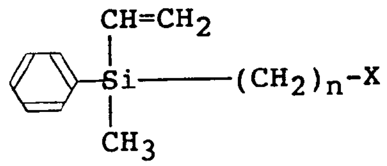

(2)

wherein n is as defined above, and X is a halogen atom or a sulfonyloxy group having the formula $R'SO_3$- where R' is methyl, p-tolyl or trifluoromethyl, with a dimethylmorpholine having the general formula (3):

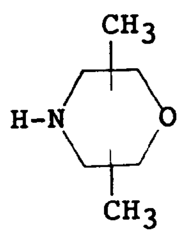

(3)

The dimethylmorpholine used above is selected from 2,3-, 2,5-, 2,6-, 3,5-, 3,6-, and 5,6-dimethylmorpholines depending on the structure of the desired compound of the general formula (1).

The reaction between the silane compound of the general formula (2) and the dimethylmorpholine of the general formula (3) can be generally performed under normal conditions for nucleophilic substitution reaction. Solvents used for the reaction include, for example, methanol, ethanol, isopropanol, butanol, acetone, methyl ethyl ketone, benzene, toluene, xylene, diethyl ether, tetrahydrofuran, dioxane, 1,2-dimethoxyethane, N,N-dimethylformamide , dimethylacetoamide, dimethyl sulfoxide and hexamethylphosphoric triamide, which may be used singly or as a mixed solvent of two or more.

Reaction temperature is not particularly limited, but normally the reaction is carried out from room temperature to the boiling point of a solvent. Although the reaction can proceed without a catalyst under the conditions above, a catalyst may be optionally used. The catalysts which may be used include, for example, sodium iodide, potassium iodide, tetra n-butyl ammonium bromide, tetrabutylammonium iodide, tetrabutylammonium hydrogensulfate, and crown ethers.

The compound of the general formula (2) wherein X is a halogen atom, can be obtained by converting a chloromethylsilane compound of the formula (4):

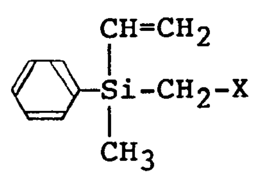

(4)

wherein X is as defined above, into a corresponding organometailic compound such as an organolithium reagent or a Grignard reagent and the subjecting the organometailic compound to coupling with a α-bromo-ω-chloroalkane having the formula (5):

$Br-(CH_2)_{n-1}-Cl$ (5)

wherein n is as defined above (Japanese Pre-examination Patent Publication (KOKAI) No. 2-270886(1990)).

The compound of the general formula (2) wherein X is a sulfonyloxy group, can be obtained, for example, by converting a pentane that has a halogen atom at one terminal end and a blocked hydroxyl group at the other terminal group into a Grignard reagent represented by the general formula (6):

$RO-(CH_2)_n-MgX$ (6)

wherein n and X are as defined above, and R stands for, for example, silyl groups such as trimethylsilyl, triethylsilyl and tert-buthyldimethylsilyl, alkyl groups such as methyl and ethyl, alkoxyalkyl groups such as ethoxyethyl, methoxymethyl and methoxyethyl, and tetrahydropyranyl group, reacting the Grignard reagent with the chlorosilane represented by the formula (7):

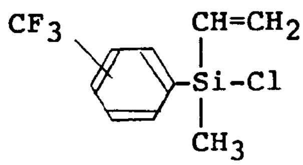

(7)

to produce a substituted hydroxyalkylsilane represented by the general formula (8):

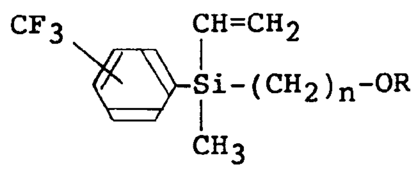

(8)

wherein n and R are as defined above, hydrolyzing the silane of the formula (8) to produce a hydroxyalkylsilane, and reacting the hydroxyalkylsilane with, e.g., a sulfonyl chloride having the formula:

$$R'SO_3Cl$$

wherein R′ is as defined above.

## Plant growth regulator

The silane compound of the general formula (1) exhibits unique plant growth regulating effects which have not been exhibited by any known compounds, in particular the following effects:

(1) inhibiting the growth and development of plumules and suckers,
(2) inhibiting the elongation of plant length,
(3) shedding flower buds and flowers, and
(4) promoting the ripening of fruits.

The biological activities above are useful in the effective production and harvest of field crops and mechanization of the harvest, and provide great advantages.

Thus, the present invention also provides a plant growth regulator (hereinafter simply referred to "regulator") comprising the silane compound represented by the general formula (1) as an active ingredient.

Specific applications are described below.

(a) The regulator of the present invention has the effect of inhibiting the growth of suckers of plants. In particular, when applied to tobacco, the regulator exhibits markedly strong sucker-inhibiting activities. The regulator also has an effect of shedding flower buds. Therefore, the application of the regulator can markedly improve efficiency of cultivation operations.

That is, in cultivation of tobacco, topping operation is performed inevitably to prevent flower-setting and seed-setting, and therefore a lot of labor is required. This is because chemicals effective in exhibiting flower-setting or seed-setting have not been known. On the other hand, the topping promotes the growth of suckers. For prevention thereof, maleic hydrazide or the like has been put into practical use. The maleic hydrazide is effective in inhibiting the growth of suckers; however, it has no effects of shedding flower buds or withering flowers, makes flavor turn bad to lower the quality of tobacco, and is suspected of carcinogenesis. The compound of the general formula (1) of the present invention exhibits the effects together, and is high in safety.

(b) The regulator of the present invention can be sprayed to various crops other than tobacco to thereby shed flower buds or flowers; hence it is useful for mechanization of harvest of indefinite inflorescence crops. Application by spray at a suitable time when seeds are being set, can shed flower buds and flowers only without influence on seeds under growth. This allows fruits to grow well and to ripe at the same time, and enables improvement in efficiency of cultivation and harvest and simultaneous mechanical harvest. The crops to which the regulator can be applied in such a manner include, for example, tomato, coffee and lint.

(c) The regulator of the present invention, where applied to plants the seed-setting of which has been completed, exhibits the effect of enhancing the coloration and Brix of the fruits. This effect is confirmed with respect to kaki (Japanese persimmon) and tomato and, and is expected to be performed with respect to mikan (a mandarin orange).

(d) The regulator of the present invention, where applied to plants, exhibits an action of withering and shedding young buds and young leaves, although it has no action on matured leaves or stems. Some crops are difficult to harvest mechanically if leaves remain at the time of harvest. The use of the regulator of the invention enables the mechanical harvest. Such application is possible to beans such as soy bean and azuki bean (small red bean), and crops such as peanut, lint and tomato.

(e) The application of the regulator to a plant inhibits the growth of the bodies of the plant. Specifically, elongation of the plant length is inhibited. Such an action is expected to be used, e.g., to inhibit elongation of the plant length of bottom grass around normal roads and expressways and weed around railroad ties, and management of weed in the rough of or around golf courses.

Formulation

The compound of the general formula (1) neat may be used as the plant growth regulator. That is, the plant growth regulator may substantially consist of the compound of the general formula (1). However, the regulator may further contain a carrier to form a formulation so that it may be readily used. Generally, such a formulation is diluted as necessary before use. There is no particular limitation on the preparation of the formulation; therefore, the formulation can be prepared according to known methods for conventional agricultural chemicals.

For example, the silane compound of the general formula (1) as an active ingredient is mixed and ground with a suitable carrier and, optionally, an inactive dispersing agent or a solvent intimately. A mixture of water, a dispersing agent and the active ingredient, i.e., wettable powders, pastes and emulsifiable concentrates, can be diluted with water to a desired concentration. These comprise the active ingredient and the carrier and, optionally, additives for stabilizing the active ingredient, a surface active agent, an anti-foaming agent and a solvent. The formulation of the present invention normally contains the compound of the general formula (1) as an active ingredient in an amount of 0.5% by weight to 80% by weight.

The wettable powder and the paste are obtainable by mixing and grinding the compound of the general formula (1) with a dispersing agent and carrier until an uniform matter is obtained.

The carriers which may be used suitably include, for example, kaolin, talc, clay, loess, chalk, lime stone, granular coal, dolomite, diatomaceous earth, precipitated silica, silicates of alkaline earth metals, sodium silicate and aluminum potassium silicate (feldspars and mica), calcium sulfate, magnesium sulfate, powdered plastics, calcium carbonate, potassium chloride, potassium nitrate, nitrocellulose and stanches, fertilizers such as, e.g., ammonium sulfate, ammonium phosphate and ammonium nitride, urea, vegetable matter such as, e.g., powdered cereals, powdered barks, powdered woods, powdered nut shells, powdered cellulose, plant residues and activated charcoal. These may be used singly or in combination of two or more.

The dispersing agents which may be used suitably, include, for example, condensation products of a sulfonated naphthalene or its derivatives with formaldehyde; condensation products of naphthalene or naphthalenesulfonic acid, a phenol and formaldehyde; alkali metal salts, ammonium salt and alkaline earth metal salts of lignin sulfonic acid, and alkylaryl sulfonates; alkali metal salts and alkaline earth metal salts of dibutyl-naphthalenesulfonic acid; aliphatic alcohol sulfates; salts of hexadecanol sulfate, octadecanol sulfate and heptadecanol sulfate; salts of aliphatic alcohol glycol ethers, sodium salt of oleyl ethyonate, sodium salt of oleylmethyltaurine, di-tert-acetylenyl glycol, dialkyldilaurylammonium chloride; and alkali metal salts and alkaline earth metal salts of aliphatic acids.

To a mixture of these may be added, for example, additives for stabilizing the active ingredient of the present invention, nonionic, anionic or cationic surface active agents for improving the adhesion of the active ingredient to plants. As an adhesion improver may be used, for example, mixtures of oleic acid and lime, cellulose derivatives such as methylcellulose, hydroxyethyleneglycol mono- or dialkylphenol ethers having 5 to 15 ethylene oxide groups and containing 8 or 9 carbon atoms in alkyl moieties, alkali metal salts and alkaline earth metal salts thereof; polyethylene glycols (carbowaxes), aliphatic alcohol polyethylene glycol ethers having 5 to 20 ethylene oxide groups and containing 8 to 18 carbon atoms in the aliphatic alcohol moieties, condensation products of ethylene oxide or propylene oxide; polyvinyl pyrrolidone, polyvinyl alcohol, condensation products of wear and formaldehyde, and latex.

In preparing a formulation, the silane compound of the general formula (1) is mixed with one or more additives described above, ground and then passed through a sieve so as to adjust the particle size of solid matter to 0.02 - 0.04 mm in the case of wettable powders, or to 0.03 mm or below in the case of pastes.

In preparing an emulsifiable concentrate or paste, a dispersing agent, organic solvent and water as mentioned above are used. The solvents include, for example, alcohols, benzene, xylene, toluene, dimethyl sulfoxide, and mineral oil fractions with a boiling point of 120 to 350°C. The solvent to be used is required to have little odor, to be free of mineral poisons and to be inert to the compound of the general formula (1), and must not be flammable.

The regulator may contain a light tolerance agent and anti-oxidizing agent.

The regulator of the present invention can be prepared in the form of a solution. To be used as a solution, the silane compound of the general formula (1) is dissolved in an organic solvent, a mixed solvent or water. The organic solvent includes, for example, aliphatic hydrocarbons, aromatic hydrocarbons, halogenated derivatives thereof, alkylnaphthalenes or a mineral oil. These may be used singly or in combination of two or more. The solution thus prepared preferably contains the compound of the general formula (1) in a concentration of 1 to 20% by weight.

The solid formulations, e.g., dusts, sprays and granules, contain a solid carrier as mentioned above and optionally an additive for stabilizing the active ingredient. The particle size of the carrier is preferably about 0.1 mm or below in the case of dusts, about 0.075 to 0.2 mm in the case of sprays, and 0.2 mm or above in the case of granules. The solid formulation preferably contains the compound of the general formula (1) in an amount of 0.5 to 80% by weight.

The formulations thus prepared may be applied suitably according to the situation so that high effects may be obtained.

## EXAMPLES

The present invention will now be described with reference to examples.

### Synthesis Example 1

### Synthesis of 4-trifluoromethylphenyl-4-chlorobutyl-vinylmethylsilane

From a suspension containing 2.42 g (100 mmol) of metallic magnesium in 50 ml of tetrahydrofuran (THF) and 26.4 g (100 mmol) of 4-trichlorophenylchloromethylphenylchloromethylvinylmethylsilane, in accordance with the conventional method, a solution of 4-trifluoromethylphenylvinylmethylsilylmethylmagnesium chloride (Grignard reagent) in THF was prepared. Separately, in a solution of 15.7 g (100 mmol) of 1-bromo-4-chlorobutane in 50 ml of THF were sufficiently dissolved under stirring, 100 mg of lithium chloride and 100 mg of cupric chloride. To the resulting solution of 1-bromo-4-chlorobutane, the Grignard solution as prepared above was added dropwise at room temperature over 30 minutes. After the resulting mixture was held at room temperature for another 2 hours, a solution of ammonium chloride in a diluted hydrochloric acid was added thereto, and then the mixture thus obtained was subjected to extraction with 50 ml of ethyl acetate twice. The extract obtained was dehydrated with anhydrous sodium sulfate, and was subjected to a reduced pressure to distill off the solvent. The residue obtained was distilled under a reduced pressure to obtain 24.2 g of 4-trifluoromethylphenyl-4-chlorobutylvinylmethylsilane as a fraction of 135°C at 10 mmHg. Yield: 79%.

The results of mass spectrometry for the compound obtained are given below.

MASS(m/e) 291($M^+$ -15), 287, 279, 235, 223, 215(base), 189, 172, 153

### Synthesis Example 2

### Synthesis of 4-trifluoromethylphenyl-5-chloropentylvinylmethylsilane

In the same manner as in Synthesis Example 1, 4-trifluoromethylphenylvinylmethylsilylmethylmagnesium chloride was prepared using 31.5 g (119 mmol) of 4-trifluoromethylphenylchloromethylvinylmethylsilane, 2.89 g of magnesium and 60 ml of tetrahydrofuran. Reaction was carried out in the same manner as in Synthesis Example 1 except that the 4-trifluoromethylphenylvinylmethylsilylmethylmagnesium chloride as prepared above was used, the 1-bromo-3-chloropropane was substituted by 20.3 g (119 mmol) of 1-bromo-4-chlorobutane, and the amounts of cupric chloride and lithium chloride were each changed to 120 mg, to produce 27.5 g of 4-trifluoromethylphenyl-5-chloropentylvinylmethylsilane as a fraction of 135°C at 5 mmHg. Yield: 72%

MASS(m/e) 301($M^+$ -29), 293, 235, 223, 215(base), 189, 172, 153

Synthesis Example 3

Synthesis of 4-trifluoromethylphenyl-6-chlorohexylvinylmethylsilane

In the same manner as in Synthesis Example 1, 4-trifluoromethylphenylvinylmethylsilylmethylmagnesium chloride was prepared using 29.0 g (110 mmol) of 4-trifluoromethylphenylchloromethylvinylmethylsilane, 2.66 g of magnesium and 60 ml of tetrahydrofuran. Reaction was carried out in the same manner as in Synthesis Example 1 except that the 4-trifluoromethylphenylvinylmethylsilylmethylmagnesium chloride as prepared above was used, the 1-bromo-3-chloropropane was substituted by 20.3 g (110 mmol) of 1-bromo -4-chloropentane, and the amounts of cupric chloride and lithium chloride were each changed to 110 mg, to produce 30.1 g of 4-trifluoromethylphenyl-6-chlorohexylvinylmethylsilane as a fraction of 148°C at 5 mmHg. Yield: 82%

MASS(m/e) 315($M^+$ -19), 250, 235, 223, 215(base), 189, 153

Synthesis Example 4

Synthesis of 4-trifluoromethylphenyl-7-chloroheptylvinylmethylsilane

In the same manner as in Synthesis Example 1, 4-trifluoromethylphenylvinylmethylsilylmethylmagnesium chloride was prepared using 33 g (125 mmol) of 4-trifluoromethylphenylchloromethylvinylmethylsilane, 3.03 g of magnesium and 60 ml of tetrahydrofuran. Reaction was carried out in the same manner as in Synthesis Example 1 except that the 4-trifluoromethylphenylvinylmethylsilylmethylmagnesium chloride as prepared above was used, the 1-bromo-3-chloropropane was substituted by 20.3 g (110 mmol) of 1-bromo-4-chloropentane, and the amounts of cupric chloride and lithium chloride were each changed to 120 mg, to produce 37.4 g of 4-trifluoromethylphenyl-7-chloroheptylvinylmethylsilane as a fraction of 149°C at 3 mmHg. Yield: 72%

MASS(m/e) 329($M^+$ -19), 250, 235, 223, 215(base), 189, 153

Example 1

Synthesis of 4-trifluoromethylphenyl-4-(2,6-dimethylmorpholino)butylvinylmethylsilane

In a mixed solvent of 10 ml of THF and 5 ml of HMPA was dissolved 3.07 g (10 mmol) of 4-trifluoromethylphenyl-4-chlorobutylvinylmethylsilane prepared in Synthesis Example 1, and then 1.67 g (10 mmol) of potassium iodide and 1.68 g (20 mmol) of 2,6-dimethylmorpholine were added to the solution. The mixture obtained was stirred in a nitrogen atmosphere. The mixture was subjected to reaction under reflux for 2 hours. After cooling, 50 ml of ethyl acetate and 50 ml of water were added to the mixture, and the organic layer formed was separated. The organic layer separated was washed with 50 ml of water three times, dehydrated with anhydrous sodium sulfate, and then distilled to remove the solvent, so that a yellowish liquid was obtained. The liquid was subjected to silica gel column chromatography to obtain 3.24 g of colorless oily 4-trifluoromethylphenyl-4-(2,6-dimethylmorpholino)butylvinylmethylsilane. Yield: 91%.

The results of analyses for the compound obtained are given below.

MASS(m/e) 386($M^+$), 385, 366, 327, 312, 298, 270, 289, 128(base)

$^{13}$C-NMR(δ, ppm, $CDCl_3$), -5.228, 13.756, 19.137(∗2), 21.564, 30.182, 58.188, 59.608(∗2), 71.600, 124.219, 124.219, 134.251, 135.708, 142.545

Example 2

Synthesis of 4-trifluoromethylphenyl-5-(2,6-dimethylmorpholino)pentylvinylmethylsilane

3.21 g (10 mmol) of the 4-trifluoromethylphenyl-5-chloropentylvinylmethylsilane prepared in Synthesis Example 2 was reacted with 1.68 g (10 mmol) of 2,6-dimethylmorpholine using 1.66 g (10 mmol) of potassium iodide in a mixed solvent of 10 ml of THF and 5 ml of HMPA in the same manner as in Example 1 to give 3.07 g of 4-trifluoromethylphenyl-5-(2,6-dimethylmorpholino)pentylvinylmethylsilane. Yield: 83%.

The results of analysis on this compound are given below.

MASS(m/e) 400($M^+$), 399, 385, 384, 381, 380, 341, 340, 326, 281, 256, 189, 128(base),

$^{13}$C-NMR(δ, ppm, $CDCl_3$), -5.240, 13.731, 19.133(∗2), 23.510, 26.075, 31.226, 58.568, 59.604(∗2), 71.576, 116.336, 124.197, 134.203, 135.797, 142.654

## Example 3

### Synthesis of 4-trifluoromethylphenyl-6-(2,6-dimethylmorpholino)hexylvinylmethylsilane

3.35 g (10 mmol) of the 4-trifluoromethylphenyl-6-chlorohexylvinylmethylsilane prepared in Synthesis Example 3 was reacted with 1.68 g (20 mmol) of 2,6-dimethylmorpholine using 1.66 g of potassium iodide in a mixed solvent of 10 ml of THF and 5 ml of HMPA in the same manner as in Example 1 to give 3.45 g of 4-trifluoromethylphenyl-6-(2,6-dimethylmorpholino)hexylvinylmethylsilane. Yield: 90%.

The results of analysis on this compound are given below.

MASS(m/e) 414($M^+$), 413, 399, 398, 395, 394, 355, 340, 189, 128(base)

$^{13}$C-NMR(δ, ppm, $CDCl_3$), -5.288, 13.772, 19.137(*2), 23.518, 26.423, 27.099, 33.338, 58.754, 59.624(*2), 71.592, 116.332, 124.187, 134.175, 135.865, 142.725

## Example 4

### Synthesis of 4-trifluoromethylphenyl-7-(2,6-dimethylmorpholino)heptylvinylmethylsilane

3.49 g (10 mmol) of the 4-trifluoromethylphenyl-7-chloroheptylvinylmethylsilane prepared in Synthesis Example 3 was reacted with 1.68 g (20 mmol) of 2,6-dimethylmorpholine using 1.66 g (10 mmol)of potassium iodide in a mixed solvent of 10 ml of THF and 5 ml of HMPA in the same manner as in Example 1 to give 3.38 g of 4-trifluoromethylphenyl-7-(2,6-dimethylmorpholino)heptylvinylmethylsilane. Yield: 85%.

The results of analysis on this compound are given below.

MASS(m/e) 428($M^+$), 427, 413, 412, 409, 408, 401, 400, 354, 189, 128(base)

$^{13}$C-NMR(δ, ppm, $CDCl_3$), -5.216, 13.772, 19.149(*2), 23.506, 26.492, 27.374, 29.090, 33.338, 58.734, 59.596(*2), 71.584, 124.188, 134.171, 135.906, 142.762

## Synthesis Example 5

### Synthesis of 3-trifluoromethylphenyl-4-chlorobutylvinylmethylsilane

The procedure of Synthesis Example 1 was repeated except that 4-trifluoromethylphenylchloromethylvinylmethylsilane was substituted by 3-trifluoromethylphenylchloromethylvinylmethylsilane. That is, 3-trifluoromethylphenylvinylmethylsilylmetylmagnesium chloride synthesized using 21 g (79 mmol) of 3-trifluoromethylphenylchloromethylvinylmethylsilane, 1.93 g of magnesium and 40 ml of tetrahydrofuran, was reacted with 12.5 g (79 mmol) of 1-bromo-4-chloropropane using cupric chloride and lithium chloride to give 19.2 g of 3-trifluoromethylphenyl-4-chlorobutylvinylmethylsilane as a fraction with a boiling point of 136°C under 10 mmHg. Yield: 79%.

MASS(m/e) 291($m^+$ -15), 287, 279, 235, 215(base), 189, 172, 153

## Synthesis Example 6

### Synthesis of 3-trifluoromethylphenyl-5-chloropentylvinylmethylsilane

In the same manner as in Synthesis Example 5, 3-trifluoromethylphenylvinylmethylsilylmethylmagnesium chloride was prepared using 100 g (378 mmol) of 3-trifluoromethylphenylchloromethylvinylmethylsilane, 9.18 g of magnesium and 200 ml of tetrahydrofuran. Reaction was carried out in the same manner as in Synthesis Example 5, except that the 3-trifluoromethylphenylvinylmethylsilylmethylmagnesium chloride as prepared above was used, the 1-bromo-3-chloropropane was substituted by 64.8 g (378 mmol) of 1-bromo-4-chlorobutane, and the amounts of cupric chloride and lithium chloride were each changed to 380 mg, to produce 110 g of 3-trifluoromethylphenyl-5-chloropentylvinylmethylsilane as a fraction with a boiling point of 118°C at 4 mmHg. Yield: 91%.

MASS(m/e) 301($m^+$ -19), 230, 235, 215(base), 189, 172, 153

## Synthesis Example 7

### Synthesis of 3-trifluoromethylphenyl-6-chlorohexylvinylmethylsilane

In the same manner as in Synthesis Example 5, 3-trifluoromethylphenylvinylmethylsilylmethylmagnesium

chloride was prepared using 30 g (113 mmol) of 3-trifluoromethylphenylchloromethylvinylmethylsilane, 2.75 g of magnesium and 60 ml of tetrahydrofuran. Reaction was carried out in the same manner as in Synthesis Example 5, except that the 3-trifluoromethylphenylvinylmethylsilylmethylmagnesium chloride as prepared above was used, the 1-bromo-3-chloropropane was substituted by 21.0 g (113 mmol) of 1-bromo-5-chloropentane, and the amounts of cupric chloride and lithium chloride were each changed to 80 mg, to produce 31.9 g of 3-trifluoromethylphenyl-6-chlorohexylvinylmethylsilane as a fraction with a boiling point of 130°C at 4 mmHg. Yield: 84%.

MASS(m/e) 315($M^+$ -19), 251, 235, 223, 215(base), 189, 172, 153

Synthesis Example 8

Synthesis of 3-trifluoromethylphenyl-7-chloroheptylvinylmethylvinylmethylsilane

In the same manner as in Synthesis Example 5, 3-trifluoromethylphenylvinylmethylsilylmethylmagnesium chloride was prepared using 28 g (98 mmol) of 3-trifluoromethylphenylchloromethylvinylmethylsilane, 2.39 g of magnesium and 50 ml of tetrahydrofuran. Reaction was carried out in the same manner as in Synthesis Example 5, except that the 3-trifluoromethylphenylvinylmethylsilylmethylmagnesium chloride as prepared above was used, the 1-bromo-3-chloropropane was substituted by 19.6 g (98 mmol) of 1-bromo-6-chlorohexane, and the amounts of cupric chloride and lithium chloride were each changed to 100 mg, to produce 30.1 g of 3-trifluoromethylphenyl-7-chloroheptylvinylmethylsilane as a fraction with a boiling point of 150°C at 5 mmHg. Yield: 88%.

MASS(m/e) 329($M^+$ -19), 281, 233, 251, 235, 223, 215(base), 189, 153

Example 5

Synthesis of 3-trifluoromethylphenyl-4-(2,6-dimethylmorpholino)butylvinylmethylsilane

In a mixed solvent of 10 ml of THF and 5 ml of HMPA was dissolved 2.24 g (7.30 mmol) of 3-trifluoromethylphenyl-4-chlorobutylvinylmethylsilane, and then 1.22 g (7.32 mmol) of potassium iodide and 1.23 g (14.6 mmol) of 2,6-dimethylmorpholine were added to the solution. The mixture obtained was stirred in a nitrogen atmosphere. The mixture was subjected to reaction under reflux for 2 hours. After cooling, 50 ml of ethyl acetate and 50 ml of water were added to the mixture, and the organic layer formed was separated. The organic layer separated was washed with 50 ml of water three times, dehydrated with anhydrous sodium sulfate, and then distilled to remove the solvent, so that a yellowish liquid was obtained. The liquid was subjected to silica gel column chromatography to obtain 2.28 g of colorless oily 4-trifluoromethylphenyl-4-(2,6-dimethylmorpholino)butylvinylmethylsilane. Yield: 88%.

The results of analyses for the compound obtained are given below.

MASS(m/e) 386(M), 385, 367, 366, 327, 312, 298, 270, 215, 189, 128(base)

$^{13}C$-NMR(δ, ppm, $CDCl_3$), -5.204, 13.768, 19.096(*2), 21.544, 30.089, 58.139, 59.580(*2), 71.560, 125.690, 127.943, 130.340, 134.198, 135.716, 137.344

Example 6

Synthesis of 3-trifluoromethylphenyl-5-(2,6-dimethylmorpholino)pentylvinylmethylsilane

20.3 g (63.3 mmol) of the 3-trifluoromethylphenyl-5-chloropentylvinylmethylsilane prepared in Synthesis Example 6 was reacted with 10.6 g (127 mmol) of 2,6-dimethylmorpholine using 10.5 g (63 mmol) of potassium iodide in a mixed solvent of 80 ml of THF and 40 ml of HMPA in the same manner as in Example 5 to give 21.7 g of 3-trifluoromethylphenyl-5-(2,6-dimethylmorpholino)pentylvinylmethylsilane. Yield: 93%.

The results of analysis on this compound are given below.

MASS(m/e) 400($M^+$), 385, 366, 327, 312, 298, 270, 189, 128(base)

$^{13}C$-NMR(δ, ppm, $CDCl_3$), -5.204, 13.731, 19.141(*2), 23.494, 26.120, 31.198, 59.580, 59.624(*2), 71.620(*2), 125.698, 127.939, 130.367, 134.162, 135.788, 137.36, 139.070

Example 7

Synthesis of 3-trifluoromethylphenyl-6-(2,6-dimethylmorpholino)hexylvinylmethylsilane

12.0 g (35.8 mmol) of the 3-trifluoromethylphenyl-6-chlorohexylvinylmethylsilane prepared in Synthesis Example 7 was reacted with 10.6 g (71.7 mmol) of 2,6-dimethylmorpholine using 5.96 g (35.9 mmol) of potassium iodide in a mixed solvent of 35 ml of THF and 17 ml of HMPA in the same manner as in Example 5 to give 12.37 g of 3-trifluoromethylphenyl-6-(2,6-dimethylmorpholino)hexylvinylmethylsilane. Yield: 90%.

The results of analysis on this compound are given below.

MASS(m/e) 414($M^+$), 413, 399, 398, 395, 394, 355, 341, 340, 215, 189, 128(base)

$^{13}$C-NMR(δ, ppm, $CDCl_3$), -5.191, 13.780, 19.108(*2), 23.486, 26.351, 27.063, 33.257, 58.706, 59.596(*2), 71.564, 125.636, 127.919, 130.339, 134.069, 135.873, 137.338, 139.155

Example 8

Synthesis of 3-trifluoromethylphenyl-7-(2,6-dimethylmorpholino)heptylvinylmethylsilane

3.45 g (9.9 mmol) of the 3-trifluoromethylphenyl-7-chloroheptylvinylmethylsilane prepared in Synthesis Example 8 was reacted with 1.66 g (19.8 mmol) of 2,6-dimethylmorpholine using 1.64 g (9.91 mmol) of potassium iodide in a mixed solvent of 10 ml of THF and 5 ml of HMPA in the same manner as in Example 5 to give 3.07 g of 3-trifluoromethylphenyl-7-(2,6-dimethylmorpholino)heptylvinylmethylsilane. Yield: 78%.

The results of analysis on this compound are given below.

MASS(m/e) 428($M^+$), 427, 413, 412, 409, 408, 401, 400, 368, 355, 354, 215, 189, 128(base)

$^{13}$C-NMR(δ, ppm, $CDCl_3$), -5.183, 13.760, 19.133(*2), 23.486, 26.480, 27.366, 29.073, 33.293, 58.734, 59.625(*2), 71.588, 125.614, 127.919, 129.663, 130.262, 134.093, 135.881, 137.362, 139.163

Synthesis Example 9

Synthesis of 2-trifluoromethylphenyl-4-chlorobutylvinylmethylsilane

The procedure of Synthesis Example 1 was repeated except that 4-trifluoromethylphenylchloromethylvinylmethylsilane was substituted by 2-trifluoromethylphenylchloromethylvinylmethylsilane. That is, 2-trifluoromethylphenylvinylmethylsilylmetylmagnesium chloride synthesized using 30 g (113 mmol) of 2-trifluoromethylphenylchloromethylvinylmethylsilane, 2.75 g (113 mmol) of magnesium and 60 ml of tetrahydrofuran, was reacted with 17.8 g (113 mmol) of 1-bromo-4-chloropropane using cupric chloride and lithium chloride each in an amount of 120 mg to give 26.1 g of 2-trifluoromethylphenyl-4-chlorobutylvinylmethylsilane as a fraction with a boiling point of 97°C under 2 mmHg. Yield: 75%.

MASS(m/e) 215($M^+$ -91), 199, 189, 167, 161, 133, 115(base)

Synthesis Example 10

Synthesis of 2-trifluoromethylphenyl-5-chloropentylvinylmethylsilane

In the same manner as in Synthesis Example 9, 2-trifluoromethylphenylvinylmethylsilylmethylmagnesium chloride was prepared using 25.6 g (96.7 mmol) of 2-trifluoromethylphenylchloromethylvinylmethylsilane, 2.35 g of magnesium and 50 ml of tetrahydrofuran. Reaction was carried out in the same manner as in Synthesis Example 9, except that the 2-trifluoromethylphenylvinylmethylsilylmethylmagnesium chloride as prepared above was used, the 1-bromo-3-chloropropane was substituted by 16.6 g (96.7 mmol) of 1-bromo-4-chlorobutane, and the amounts of cupric chloride and lithium chloride were each changed to 100 mg, to produce 27.3 g of 2-trifluoromethylphenyl-5-chloropentylvinylmethylsilane as a fraction with a boiling point of 138°C at 2 mmHg. Yield: 88%.

MASS(m/e) 215($M^+$ -91), 205, 199, 189, 167, 161, 143, 133, 115(base), 81

Synthesis Example 11

Synthesis of 2-trifluoromethylphenyl-6-chlorohexylvinylmethylsilane

In the same manner as in Synthesis Example 9, 2-trifluoromethylphenylvinylmethylsilylmethylmagnesium

chloride was prepared using 45 g (170 mmol) of 2-trifluoromethylphenylchloromethylvinylmethylsilane, 4.13 g of magnesium and 90 ml of tetrahydrofuran. Reaction was carried out in the same manner as in Synthesis Example 9, except that the 2-trifluoromethylphenylvinylmethylsilylmethylmagnesium chloride as prepared above was used, the 1-bromo-3-chloropropane was substituted by 31.5 g (170 mmol) of 1-bromo-5-chloropentane, and the amounts of cupric chloride and lithium chloride were each changed to 170 mg, to produce 46.7 g of 2-trifluoromethylphenyl-6-chlorohexylvinylmethylsilane as a fraction with a boiling point of 144°C at 1.5 mmHg. Yield: 82%.

MASS(m/e) 215($m^+$ -105), 207, 199, 189, 133, 115(base), 81

Synthesis Example 12

Synthesis of 2-trifluoromethylphenyl-7-chloropentylvinylmethylsilane

In the same manner as in Synthesis Example 9, 2-trifluoromethylphenylvinylmethylsilylmethylmagnesium chloride was prepared using 22.5 g (85 mmol) of 2-trifluoromethylphenylchloromethylvinylmethylsilane, 2.07 g of magnesium and 50 ml of tetrahydrofuran. Reaction was then carried out in the same manner as in Synthesis Example 9, except that the 2-trifluoromethylphenylvinylmethylsilylmethylmagnesium chloride as prepared above was used, the 1-bromo-3-chloropropane was substituted by 17.0 g (85 mmol) of 1-bromo-6-chlorohexane, and the amounts of cupric chloride and lithium chloride were each changed to 85 mg, to produce 25.5 g of 2-trifluoromethylphenyl-7-chloropentylvinylmethylsilane as a fraction with a boiling point of 147°C at 1 mmHg. Yield: 86%.

MASS(m/e) 215($M^+$ -133), 208, 207, 199, 189, 161, 143, 133, 115(base), 81

Example 9

Synthesis of 2-trifluoromethylphenyl-4-(2,6-dimethylmorpholino)butylvinylmethylsilane

In a mixed solvent of 10 ml of THF and 5 ml of HMPA was dissolved 3.07 g (10 mmol) of 2-trifluoromethylphenyl-4-chlorobutylvinylmethylsilane, and then 1.67 g (10 mmol) of potassium iodide and 1.68 g (20 mmol) of 2,6-dimethylmorpholine were added to the solution. The mixture obtained was stirred in a nitrogen atmosphere. The mixture was subjected to reaction under reflux for 2 hours. After cooling, 50 ml of ethyl acetate and 50 ml of water were added to the mixture, and the organic layer formed was separated. The organic layer separated was washed with 50 ml of water three times, dehydrated with anhydrous sodium sulfate, and then distilled to remove the solvent, so that a yellowish liquid was obtained. The liquid was subjected to silica gel column chromatography to obtain 3.31 g of colorless oily 2-trifluoromethylphenyl-4-(2,6-dimethylmorpholino)butylvinylmethylsilane. Yield: 93%.

The results of analyses for the compound obtained are given below.

MASS(m/e) 386($M^+$), 385, 371, 370, 359, 358, 312, 281, 207, 189, 128(base)

Example 10

Synthesis of 2-trifluoromethylphenyl-5-(2,6-dimethylmorpholino)pentylvinylmethylsilane

6.41 g (20 mmol) of the 4-trifluoromethylphenyl-5-chloropentylvinylmethylsilane prepared in Synthesis Example 10 was reacted with 3.36 g (40 mmol) of 2,6-dimethylmorpholine using 3.32 g (20 mmol)of potassium iodide in a mixed solvent of 20 ml of THF and 10 ml of HMPA in the same manner as in Example 1 to give 6.72 g of 2-trifluoromethylphenyl-5-(2,6-dimethylmorpholino)pentylvinylmethylsilane. Yield: 91%.

The results of analysis on this compound are given below.

MASS(m/e) 400($M^+$), 399, 385, 384, 373, 372, 341, 340, 326, 208, 184, 128(base), 115, 81

Example 11

Synthesis of 2-trifluoromethylphenyl-6-(2,6-dimethylmorpholino)hexylvinylmethylsilane

3.35 g (10 mmol) of the 2-trifluoromethylphenyl-6-chlorohexylvinylmethylsilane prepared in Synthesis Example 11 was reacted with 1.68 g (20 mmol) of 2,6-dimethylmorpholine using 1.66 g (10 mmol) of potassium iodide in a mixed solvent of 10 ml of THF and 5 ml of HMPA in the same manner as in Example 1 to give 3.30 g of 2-trifluoromethylphenyl-6-(2,6-dimethylmorpholino)hexylvinylmethylsilane. Yield: 86%.

The results of analysis on this compound are given below.

MASS(m/e) 414($M^+$), 413, 399, 398, 395, 394, 387, 386, 369, 355, 354, 340, 128(base), 115

$^{13}$C-NMR(δ, ppm, $CDCl_3$), -3.923, 14.562, 19.157(*2), 23.725, 26.391, 27.083, 33.305, 58.779, 59.620(*2), 71.600, 126.086, 129.056, 130.575, 136.800, 137.237

Example 12

Synthesis of 2-trifluoromethylphenyl-7-(2,6-dimethylmorpholino)heptylvinylmethylsilane

3.49 g (10 mmol) of the 2-trifluoromethylphenyl-7-chloroheptylvinylmethylsilane prepared in Synthesis Example 12 was reacted with 1.68 g (20 mmol) of 2,6-dimethylmorpholine using 1.66 g (10 mmol) of potassium iodide in a mixed solvent of 10 ml of THF and 5 ml of HMPA in the same manner as in Example 1 to give 3.06 g of 2-trifluoromethylphenyl-7-(2,6-dimethylmorpholino)pentylvinylmethylsilane. Yield: 77%.

The results of analysis on this compound are given below.

MASS(m/e) 428($M^+$), 427, 413, 412, 401, 400, 369, 368, 355, 354, 128(base), 115

$^{13}$C-NMR(δ, ppm, $CDCl_3$), -3.945, 14.510, 19.157(*2), 23.717, 26.480, 27.378, 26.065, 33.301, 58.750, 59.592(*2), 71.588, 116.328, 126.078, 129.044, 130.569, 132.892, 136.796, 137.267

The compounds prepared in Examples 1 to 12 are hereinafter referred to as Compound I to XII, respectively.

Example 13

Test for inhibition of plumules and suckers

Ten parts by weight of a compound out of Compounds I to XII, 5 parts by weight of Triton B (N-benzyltrimethylammonium hydroxide) and 85 parts by weight of xylene were mixed uniformly to prepare a 10% emulsifiable concentrate, which was then diluted with water to prepare an emulsion with 500 ppm concentration. Thus, 12 emulsions corresponding to Examples 1 to 12 were obtained and tested for inhibition effect of elongation of plumules and sucker as below.

A soy bean (variety: TSURUNOKO) was planted in pots with a diameter of 7 cm singly per hill, and cultivated in a glasshouse. When the third leaf developed, an emulsion was uniformly applied in an amount of 20 ml per 4 soy bean plant bodies. Two weeks after the application, the fourth leaf and the portions thereabove which grew after the application and the suckers were all detached, and the total fresh weight of the detached portions from 4 individuals of was measured. The fresh weight was also measured for plants to which no chemical was applied.

The weight ratio of the fresh weight in each case where a emulsion was applied to that in the case of no application was calculated, and classified into four-ranks as below.

A: Less than 10%
B: 10% or more but less than 30%
C: 30% or more but less than 60%
D: 60% or more

The results are given in Table 1.

Table 1

| Compound | Name | |
|---|---|---|
| I | 4-trifluoromethylphenyl-4-(2,6-dimethylmorpholino)butylvinylmethysilane | B |
| II | 4-trifluoromethylphenyl-5-(2,6-dimethylmorpholino)pentylvinylmethysilane | A |
| III | 4-trifluoromethylphenyl-6-(2,6-dimethylmorpholino)hexylvinylmethysilane | A |
| IV | 4-trifluoromethylphenyl-7-(2,6-dimethylmorpholino)heptylvinylmethysilane | A |
| V | 3-trifluoromethylphenyl-4-(2,6-dimethylmorpholino)butylvinylmethysilane | A |
| VI | 3-trifluoromethylphenyl-5-(2,6-dimethylmorpholino)pentylvinylmethysilane | A |
| VII | 3-trifluoromethylphenyl-6-(2,6-dimethylmorpholino)hexylvinylmethysilane | A |
| VIII | 3-trifluoromethylphenyl-7-(2,6-dimethylmorpholino)heptylvinylmethysilane | A |
| IX | 2-trifluoromethylphenyl-4-(2,6-dimethylmorpholino)butylvinylmethysilane | A |
| X | 2-trifluoromethylphenyl-5-(2,6-dimethylmorpholino)pentylvinylmethysilane | A |
| XI | 2-trifluoromethylphenyl-6-(2,6-dimethylmorpholino)hexylvinylmethysilane | A |
| XII | 2-trifluoromethylphenyl-7-(2,6-dimethylmorpholino)hepylvinylmethysilane | A |

Example 14

Test for dwarfing activity

Dwarfing activities of the silane compound prepared in Example 6 were measured using a chrysanthemum plant in the following manner. A chrysanthemum capable of bearing flowers was cultivated in open field. When the plant length became about 35 cm and floral differentiation began, solutions with a concentration of 1,000 ppm, 300 ppm or 100 ppm prepared by diluting the 20% emulsifiable concentrate with water were each applied uniformly upon plants so that the leaves might be wetted completely. When plants in a control area where no chemical solution was applied became in full bloom, average plant length, extended length after the application of the solutions, the number of flowers set after the application and delay in flowering time were examined. The results are given in Table 2.

Table 2

| Area | Conc. of Solution | Extended length after application | Average flower No./plant | Delay in flowering |
|---|---|---|---|---|
| I | 1000 ppm | 11.2 cm (33.5%) | 8.2 (34.8%) | 15-20 days |
| II | 300 ppm | 18.7 cm (56.0%) | 10.5 (44.5%) | 10-15 days |
| III | 100 ppm | 24.7 cm (74.0%) | 14.2 (60.2%) | a few days |
| IV | NO application | 33.4 cm (100 %) | 23.6 (100 %) | 0 day |

Example 15

The silane compound prepared in Example 6 was tested for elongation inhibiting activities, chemical injury and influence on leafing and flowering time using a cucumber as the tested plant. The cucumber was finally transplanted during the first ten day of October and grown in a plastic greenhouse. When the first foliage leaf was produced, a solution with a concentration of 300 ppm or 100 ppm prepared similarly to Example 14 was applied uniformly to the plants so that they might be wetted completely. One month after the application, average plant length, average plant age in leaf number, flower-setting node order and chemical injury were examined. The results are given in Table 3.

Table 3

| Area | Conc. of Solution applied | Average plant length | Average plant age in leaf number | flower-setting node order | Chemical injury |
|---|---|---|---|---|---|
| I | 300 ppm | 19.3 cm | 4.7 (42.7%) | 3.6 | *1 |
| II | 100 ppm | 30.6 cm | 5.8 (67.7%) | 4.4 | *1 |
| III | NO application | 45.2 cm | 7.3 (100 %) | 5.7 | - |

*1 None of spots, fading and malformation were observed.

**Claims**

1. A silane compound having the general formula (1):

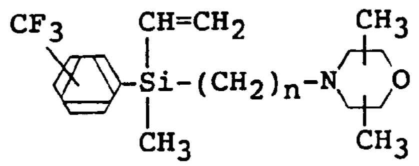

(1)

wherein n is an integer of 4 to 7.

2. The silane compound of Claim 1, wherein the trifluoromethylphenyl group bonded to the silicon atom in the general formula (1) is p-trifluoromethylphenyl, m-trifluoromethylphenyl, or o-trifluoromethylphenyl.

3. The silane of Claim 1 which is 4-trifluoromethylphenyl-4-(2,6-dimethylmorpholino)butylvinylmethysilane, 4-trifluoromethylphenyl-5-(2,6-dimethylmorpholino)pentylvinylmethysilane, 4-trifluoromethylphenyl-6-(2,6-dimethylmorpholino)hexylvinylmethysilane, 4-trifluoromethylphenyl-7-(2,6-dimethylmorpholino)heptylvinylmethysilane, 3-trifluoromethylphenyl-4-(2,6-dimethylmorpholino)butylvinylmethysilane, 3-trifluoromethylphenyl-5-(2,6-dimethylmorpholino) pentylvinylmethysilane, 3-trifluoromethylphenyl-6-(2,6-dimethylmorpholino)hexylvinylmethysilane, 3-trifluoromethylphenyl-7-(2,6-dimethylmorpholino)heptylvinylmethysilane, 2-trifluoromethylphenyl-4-(2,6-dimethylmorpholino)butylvinylmethysilane, 2-trifluoromethylphenyl-5-(2,6-dimethylmorpholino)pentylvinylmethysilane, 2-trifluoromethylphenyl-6-(2,6-dimethylmorpholino)hexylvinylmethysilane or 2-trifluoromethylphenyl-7-(2,6-dimethylmorpholino)hepylvinylmethysilane

4. A process for producing the silane compound as defined in Claim 1, comprising the step of reacting a haloalkylsilane having the general formula (2):

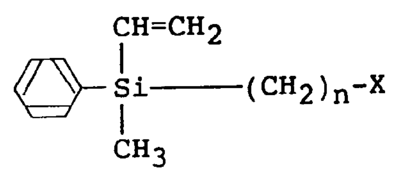

(2)

wherein n is as defined above, and X is a halogen atom or a sulfonyloxy group having the formula $R'SO_3$- where R' is methyl, p-tolyl or trifluoromethyl, with a dimethylmorpholine having the general formula (3):

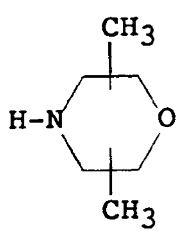

(3)

5. The process of Claim 4, wherein in the general formula (2) X is a chloride atom or a bromine atom.

6. A plant growth regulator comprising the silane compound having the general formula (1) as defined in Claim 1 as an active ingredient.

European Patent Office

# EUROPEAN SEARCH REPORT

Application Number

EP 92 30 6765

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,A | EP-A-0 313 353 (THE DOW CHEMICAL COMPANY;M&T CHEMICALS, INC.)<br>* the whole document *<br>--- | 1-6 | C07F7/08<br>A01N55/00 |
| A | CHEMICAL ABSTRACTS, vol. 114, 1991, Columbus, Ohio, US;<br>abstract no. 164490h,<br>YOSHIOKA, H. ET AL 'PREPARATION OF ORGANOSILICON COMPOUNDS'<br>page 805 ;<br>* abstract *<br>& JP-A-02 270 889 (INSTITUTE OF PHYSICAL AND CHEMICAL RESEARCH; SHIN-ETSU CHEM. IND. CO.)<br>----- | 1-5 | |
| | | | TECHNICAL FIELDS SEARCHED (Int. Cl.5 ) |
| | | | C07F<br>A01N |

The present search report has been drawn up for all claims

| Place of search | Date of completion of the search | Examiner |
|---|---|---|
| THE HAGUE | 23 SEPTEMBER 1992 | RINKEL L.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)